(19) Europäisches Patentamt / European Patent Office / Office européen des brevets

(11) **EP 2 208 099 B1**

(12) **FASCICULE DE BREVET EUROPEEN**

(45) Date de publication et mention
de la délivrance du brevet:
**17.10.2012 Bulletin 2012/42**

(21) Numéro de dépôt: **08848818.4**

(22) Date de dépôt: **07.11.2008**

(51) Int Cl.:
***G02B 7/38*** *(2006.01)*

(86) Numéro de dépôt international:
**PCT/EP2008/065133**

(87) Numéro de publication internationale:
**WO 2009/062890 (22.05.2009 Gazette 2009/21)**

(54) **DISPOSITIF DE MESURE DE DEFAUTS D'UN INSTRUMENT D'IMAGERIE A DEUX CAPTEURS OPTO-ELECTRONIQUES**

EINRICHTUNG ZUR MESSUNG DER DEFEKTE EINES ABBILDUNGSINSTRUMENTS MIT ZWEI OPTOELEKTRONISCHEN SENSOREN

DEVICE FOR MEASURING THE DEFECTS OF AN IMAGING INSTRUMENT WITH TWO OPTO-ELECTRONIC SENSORS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.11.2007 FR 0707967**

(43) Date de publication de la demande:
**21.07.2010 Bulletin 2010/29**

(73) Titulaire: **THALES**
**92200 Neuilly-sur-Seine (FR)**

(72) Inventeurs:
• **PIGOUCHE, Olivier**
**F-06130 Grasse (FR)**
• **DANTES, Didier**
**F-06560 Valbonne (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**JP-A- 8 334 668**    **JP-A- 10 227 971**
**JP-A- 57 019 703**    **US-A1- 2005 270 611**
**US-A1- 2007 102 620**    **US-B1- 6 771 422**

## Description

La présente invention se rapporte à un dispositif de mesure de défauts d'un instrument d'imagerie à capteur opto-électronique, ainsi qu'à un dispositif de correction de défauts comportant un tel dispositif de mesure.

Un instrument optique, tel qu'un télescope, placé dans un satellite d'observation en orbite, peut se défocaliser en particulier sous les effets thermo-élastiques et du dégazage de la structure.

La nécessité d'avoir un bon contraste sur les images implique la mesure précise de cette dé-focalisation et l'implantation d'un dispositif de re-focalisation qui sera actionné en fonction du résultat de la mesure.

Selon l'art antérieur, ces problèmes de détermination de la défocalisation étaient résolus de différentes façons :

- Par comparaison avec des simulations réalisées à différentes défocalisations, mais un tel procédé n'est pas très précis,
- Par analyse de la surface d'onde, la mise en oeuvre ne peut se faire qu'avec un système complexe,
- En ayant recours à une méthode de mesure consistant à faire varier le mécanisme de re-focalisation et à sélectionner la meilleure focalisation, mais la mise en oeuvre est complexe,
- A l'aide d'un dispositif spécifique ou d'un Diviseur Optique de Lignes (dit « DIVOLI »). Ce dispositif nécessite d'effectuer au sol un alignement optique parfait entre détecteurs homologues et introduit de plus dans la combinaison optique du verre.

Par ailleurs, on connaît une méthode appelée "diversité de phases" qui, en partant d'une image d'un objet et de l'image du même objet défocalisée par rapport à la première image avec un delta de défocalisation connu à l'aide d'un capteur supplémentaire défocalisé en général d'une fraction de longueur d'onde, ou à l'aide d'une action sur le mécanisme de focalisation, met en oeuvre un algorithme spécifique permettant de remonter non seulement à la défocalisation mais aussi aux autres aberrations optiques classiques.

On connait d'après le document JP 10 227971 A un dispositif de focalisation comportant un diviseur de flux optique et dans lequel on déplace une barrette de détection par rapport plan de meilleure focalisation optique, ce qui complique sa réalisation et le rend sensible aux accélérations et dégrade sa fiabilité en ambiance spatiale.

En outre, on connaît d'après les documents US 2005/0270611 A1 et US 2007/0102620 des microscopes à dispositifs de détermination de la focalisation comportant des diviseurs de faisceaux lumineux et un mécanisme piézo-électrique pour le dispositif du premier de ces deux documents, ce qui rend ces dispositifs relativement encombrants et difficilement transposables pour une utilisation spatiale avec des télescopes.

On connaît aussi d'après le document JP 57019703 A un dispositif statique de mesure avec deux capteurs alignés différemment par rappot à l'axe optique.

La présente invention a pour objet un dispositif de mesure des défauts tels que des aberrations optiques d'un instrument d'imagerie à capteur optoélectronique comportant plusieurs éléments détecteurs qui soit précis, simple à réaliser et à mettre en oeuvre et le moins onéreux et le moins encombrant possible, ainsi qu'un dispositif de correction de défauts mettant en oeuvre un tel dispositif de mesure, ces dispositifs ne risquant pas de blocage dans l'espace. En outre, en environnement spatial, les mécanismes risquent des blocages que l'on peut difficilement détecter lors d'essais sur Terre, en particulier à cause de gravités et de températures différentes. Il convient également de noter que les mouvements de mécanismes peuvent provoquer des vibrations des satellites les comportant, ce qui est gênant lorsque les instruments montés à bord de ces satellites sont des imageurs.

Le dispositif conforme à l'invention est un dispositif d'après la revendication 1.

Il est bien entendu que par « dispositif statique », on entend que le dispositif de l'invention est sans refocalisations successives et sans déplacement d'un composant optique, contrairement à ce qui est le cas pour des dispositifs connus, ce qui rend le dispositif de l'invention plus simple et moins fragile que ces dispositifs connus.

La présente invention sera mieux comprise à la lecture de la description détaillée d'un mode de réalisation, pris à titre d'exemple non limitatif et illustré par le dessin annexé, sur lequel :

- la figure 1 est un schéma très simplifié d'une vue de côté d'un dispositif de mise en oeuvre du procédé de l'invention,
- la figure 2 est une vue de dessus du dispositif de la figure 1 dans le cas d'une barrette linéique de détecteurs, et
- la figure 3 est une vue de dessus du dispositif de la figure 1 dans le cas de détecteurs disposés en matrice.

La présente invention est décrite ci-dessous en référence à un instrument opto-électronique tel qu'un télescope à capteur opto-électronique disposé à bord d'un satellite d'observation, dont le défaut à corriger est une défocalisation, mais il est bien entendu que l'invention n'est pas limitée à cette seule application, et qu'elle peut être mise en oeuvre pour des équipements à bord d'engins volants autres que des satellites (avion, hélicoptère ou drone), que ces équipements soient des télescopes ou d'autres équipements opto-électroniques, et que leurs défauts à corriger soient de la défocalisation ou d'autres type de défauts optiques, en particulier des défaut tels que l'astigmatisme, l'aberration sphérique et le coma. Pour corriger ces autres défauts, on déterminera alors une fonction de transfert, dépendant de la combinaison optique qui, pour un ensemble d'aberrations mesurées, permet de trouver les meilleures corrections en termes de déformations et de déplacements des éléments optiques du télescope.

En outre, l'invention est décrite ci-dessous en référence à un satellite pour lequel l'acquisition des images est effectuée selon la technique « Push-Broom » (balayage de la zone à imager), mais il est bien entendu qu'elle n'est pas limitée à cette technique d'acquisition et peut être mise en oeuvre avec d'autres techniques d'acquisition. L'invention s'applique en particulier aux satellites contenant une matrice opto-électronique (satellite en orbite défilante, géostationnaire ou d'astronomie) à la condition qu'on puisse imager avec la matrice inclinée et la matrice nominale la même scène à l'aide du dépointage du satellite ou de l'instrument.

On a schématisé sur les figures du dessin uniquement la partie constituant la rétine d'un télescope de satellite d'observation terrestre, sa partie optique, de même que les circuits de conversion des signaux électriques de la rétine étant réalisés de façon classique et non représentés sur le dessin. La réalisation des circuits de traitement de signal réalisant la mesure de la défocalisation et, le cas échéant, la mesure des aberrations basses fréquences, sera évidente pour l'homme du métier à la lecture de la présente description.

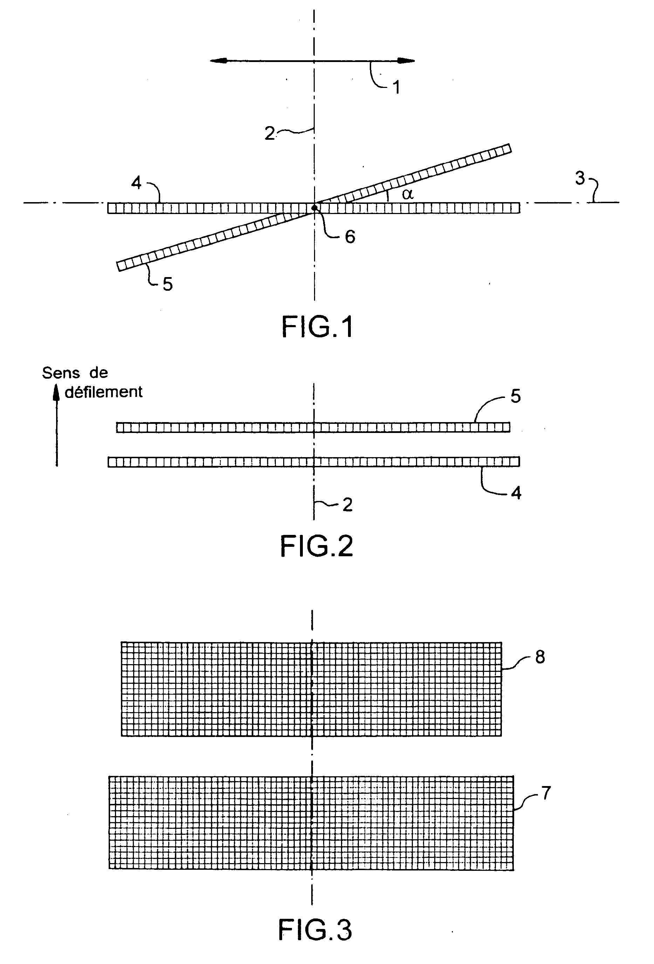

On a schématisé en figure 1 un dispositif optique classique d'imagerie 1 de télescope dont l'axe optique est référencé 2 et le plan appelé par la suite « plan focal » 3. La partie rétine de ce système d'imagerie d'un télescope comporte, d'origine, dans un premier mode de réalisation (figures 1 et 2), une barrette linéaire 4 d'éléments détecteurs opto-électroniques disposée dans le plan focal 3 (et confondue avec la trace de ce plan focal dans la vue de la figure 1). Dans la présente description, le terme « capteur » désigne tout composant opto-électronique ou tout ensemble de composants opto-électroniques pouvant être utilisé en association avec un instrument optique, par exemple un télescope, pour constituer un système d'imagerie du type mentionné ci-dessus.

Il faut noter que le plan focal 3 n'est pas défini comme le plan de meilleure focalisation de l'optique de l'instrument, mais par le fait qu'il contient la barrette linéaire nominale 4.

Selon l'invention, on dispose près de la barrette 4 et parallèlement à elle une autre barrette linéaire 5 de détecteurs, en général similaire ou plus courte que la barrette 4, qui entre, dans le présent exemple, dans le champ optique du dispositif optique 1. On considère que la barrette 5 est parallèle à la barrette 4 dans la mesure où leurs projections sur un plan perpendiculaire à l'axe optique 2 sont parallèles entre elles, comme représenté en figure 2. Cependant, la barrette 5 n'est pas contenue dans le plan contenant la barrette 4 et perpendiculaire à l'axe optique, et elle le coupe seulement selon une droite dont la trace 6 est visible en figure 1. De façon générale, cette droite 6 est contenue dans les deux plans contenant chacun une des deux barrettes (ou plus exactement les surfaces sensibles de ces barrettes, que l'on peut supposer être à deux dimensions), mais elle ne passe pas nécessairement par le milieu de la longueur de chacune de ces deux barrettes. Le plan de la barrette 5 fait un angle $\alpha$ avec le plan focal 3. La valeur de l'angle $\alpha$ dépend, selon la méthode de mesure adoptée, de l'évaluation de la défocalisation maximum de l'instrument et de la longueur de la barrette ou bien, en cas d'utilisation de la méthode dite de « diversité de phases » d'une fraction ou d'un multiple de la longueur d'onde optique et de la longueur de la barrette, le sinus de l'angle étant le rapport entre la défocalisation maximum et la moitié de la longueur de la barrette. Par la suite, la barrette 4 sera également dénommée barrette nominale, et la barrette 5 sera dénommée barrette inclinée. Le point 6 a été représenté au milieu de la longueur de la barrette 5 et sur l'axe 2, mais ce n'est pas nécessairement le cas, et ce point (qui correspond à l'intersection de la barrette 5 avec le plan focal 3) peut être distant de l'axe 2 et/ou non situé au milieu de la barrette 4.

On notera que dans l'exemple illustré sur le dessin la barrette 5 est proche de la barrette 4, mais, en particulier lorsqu'il n'y a pas d'espace suffisant dans le champ optique du dispositif 1 pour y loger la barrette 5, on peut la disposer hors de ce champ et lui faire recevoir la même zone que celle reçue par la barrette 4 (pas simultanément pour les deux barrettes) à l'aide d'un dispositif annexe. Pour que la barrette 5 puisse recevoir la même zone que la barrette 4, on peut soit mettre à profit le défilement du satellite porteur ou bien une manoeuvre du satellite porteur, soit recourir au basculement de l'instrument, afin de déplacer l'axe de visée du télescope pour que la zone de terrain (ou de l'espace) qui vient d'être imagée sur la barrette 4 soit imagée aussitôt sur la barrette 5.

Grâce à l'inclinaison de la barrette 5 par rapport au plan focal 3, le long de la barrette, chaque pixel « voit » une focalisation différentie , variant de $-d_{max}$ à $+d_{max}$ . Le paramètre $d_{max}$ est une majoration de la dé-focalisation possible lorsque les barrettes se trouvent dans le meilleur plan de focalisation de l'instrument.

Lorsque l'instrument est dé-focalisé avec une dé-focalisation d0 inconnue alors :

La rétine de la barrettes nominale est défocalisée de d0
Le long de la barrette inclinée, la dé-focalisation varie de $d0-d_{max}$ à $d0+d_{max}$ , et la dé-focalisation d'un pixel i sera donc $di=d0+ i*d_{max}/i_{max}$ (en supposant que l'indice i va de $-i_{max}$ à $+ i_{max}$)

Les barrettes inclinée et nominale sont parallèles et voient donc le même paysage à un décalage temporel près dû au décalage en Y des barrettes selon la direction de la vitesse de défilement (en mode « push-broom »). Le rapport Ri(f) entre la DSP (Densité Spectrale de Puissance, calculée selon un procédé de l'art antérieur) de l'image obtenue par la barrette inclinée et la DSP de l'image obtenue par la rétine nominale pour une colonne i donnée pour une fréquence spatiale f dans les images (lesdites DSP des images étant corrigées d'une estimation de la DSP du bruit d'acquisition évaluée selon l'état de l'art) est alors :

$$R_i(f) = \frac{DSPpc_i(f)\ FTMdefoc(di+d0)(f)^2}{DSPpc_i(f)\ FTMdefoc(d0)(f)^2} = \frac{FTMdefoc(di+d0)(f)^2}{FTMdefoc(d0)(f)^2}$$

dans cette expression, FTMdefoc(d)(f) est la Fonction de Transfert de Modulation de l'instrument pour une fréquence spatiale considérée f et pour une défocalisation d, c'est-à-dire qu'elle qualifie le flou de l'image obtenue, di est la défocalisation relative d'un pixel ou d'une colonne de pixels de rang i du capteur incliné par rapport au capteur nominal, défocalisation qui est une fonction linéaire de i* sinus α selon l'expression : di=i*largeur du pixel sur la barrette inclinée * sinus α (où i est compté depuis le centre de la barrette inclinée, c'est à dire qui a la même défocalisation que celle de la barrette nominale) et $DSPpc_i(f)$ est la DSP de là portion de paysage vue par la colonne i pour la fréquence spatiale f. Du fait que la DSP du paysage de la colonne i se trouve au numérateur et au dénominateur, elle est éliminée dans Ri et n'intervient pas.

Ce rapport sera maximal pour la colonne i0 de meilleure focalisation, on en déduit la valeur de la dé-focalisation de l'instrument d0=-di0 (di0 est la défocalisation relative de la colonne i0 sur le capteur incliné). La recherche de la valeur maximale de Ri (f) donne donc directement la défocalisation d0 de l'instrument.

Ceci est valable pour toute fréquence f. La défocalisation ayant un impact en FTM aux hautes fréquences, on peut choisir f ou bien calculer le rapport dans une bande fréquentielle (fa,fb) proche de la demi-fréquence d'échantillonnage. On notera que, du fait que la DSP du bruit du détecteur et le repliement de spectre peuvent perturber la mesure de Ri, la demi-fréquence d'échantillonnage n'est pas nécessairement la meilleure fréquence d'analyse possible. Une optimisation de la bande de fréquence d'analyse est possible compte tenu des caractéristiques de FTM de l'optique et du bruit du détecteur.

Bien sûr, on peut adapter la méthode en considérant que la dé-focalisation est pratiquement constante sur des groupes de pixels adjacents de la barrette inclinée. On utilise alors la DSP de chaque groupe de colonnes.

A noter que les longueurs des barrettes considérées peuvent être très grandes (quelques milliers de pixels), ce qui améliore la précision de la méthode.

Selon une variante de l'invention, lorsque le capteur opto-électronique comporte, comme schématisé en figure 3, une matrice rectangulaire nominale 7 d'éléments détecteurs opto-électroniques, on dispose parallèlement à celle-ci une autre matrice rectangulaire 8 (identique ou non) et inclinée de la même façon que la barrette 5 l'est par rapport à la barrette 4.

Selon une autre variante de l'invention, on met en oeuvre la méthode dite de « diversité de phases » pour chaque couple de sous-images d'une même scène ou du même objet. Par couple de sous-images, on entend une sous-image donnée par la barrette inclinée et la sous- image correspondante (qui voit le même objet ou zone du paysage) de la barrette nominale (à plat), défocalisées d'une valeur pratiquement constante à l'intérieur de chaque sous- image pourvu que l'angle α soit assez petit, mais de défocalisations différentes entre couples en fonction de la position de la sous- image sur le capteur incliné, et grâce à un effet de moyennage ou de moyennage pondéré des résultats de la mise oeuvre des algorithmes de mesure des aberrations optique de la méthode de diversité de phase selon l'art antérieur, on obtient une grande amélioration de la précision des résultats finaux de cette méthode de « diversité de phases ». Les sous-images sont avantageusement des imagettes de quelques dizaines de pixels de coté, par exemple 150 pixels. Sur ces 150 pixels, la défocalisation doit être à peu près constante (ce qui est vrai si α est petit). On obtient alors (N/ 150) couples différents (N= nombre de pixels de la barrette). On peut prendre moins de couples, le choix étant fait en particulier selon un critère dépendant du gradient du paysage à l'intérieur de chaque sous-image pour éliminer les scènes quasiment homogènes, ou en les espaçant, pour en choisir par exemple la moitié du nombre total. De chaque couple, la diversité de phases permet d'extraire les aberrations basses fréquences de l'optique: défocalisation, coma, astigmatisme, etc. On fait la moyenne des M résultats (M=N/(150*2) pour améliorer la précision de ces aberrations, ce qui permet d'obtenir une mesure précise.

Dans les modes de réalisation décrits ci-dessus, il faut savoir associer un objet vu par la barrette nominale au même objet vu par la barrette inclinée. C'est à dire qu'il faut une correspondance sub-pixellique entre les deux sous-images. Or, si les deux barrettes sont assez écartées, il peut y avoir des perturbations géométriques en particulier dues au dérives du SCAO (Système de Contrôle d'Attitudes et d'Orbite) et dues aux micro-vibrations qui risquent de déregistrer les images (c'est à dire qu'elles ne se superposeront pas pour certaines configurations de la plate-forme). Ce problème est résolu classiquement par, d'une part:

- soit une modélisation des déformations entre les deux images par un modèle de l'instrumentation de bord (utilisant en particulier les mesures SCAO si elles sont assez précises),
- soit une modélisation directement d'image à image par des corrélations d'images à partir desquelles on construit un modèle de correspondance (bien connu en traitement d'images)

et d'autre part par un ré-échantillonnage éventuel des couples d'images dans la même géométrie en utilisant l'interpolateur le plus adapté a la conservation de la DSP des images.

Ainsi, grâce à la simple addition d'une barrette inclinée et de quelques circuits de calcul, on crée un nombre important de couples d'images défocalisées (avec des deltas de défocalisation différents), ce qui permet d'avoir une très bonne résolution pour la détermination des principales aberrations affectant l'optique commune aux deux capteurs.

Selon une caractéristique avantageuse de l'invention, le dispositif de mesure est mis en oeuvre dans un dispositif de correction des défauts optiques précités (dus en particulier aux déformations thermo-élastiques et au dégazage), afin de réaliser un instrument optique autofocus. Ce dispositif de mesure est alors inséré dans une boucle d'asservissement comportant en particulier un dispositif (mécanique, thermique ou optique) de compensation des déformations dues à l'optique de la barrette nominale. La réalisation d'un tel dispositif de correction dépendant des caractéristiques de l'instrument, il ne sera pas décrit ici plus en détail.

## Revendications

1. Dispositif statique de mesure de défauts optiques d'un instrument d'imagerie à capteur opto-électronique comportant plusieurs éléments détecteurs, et comportant un premier capteur (4) et au moins un deuxième capteur (5) disposé dans un plan incliné par rapport au plan contenant le premier capteur (4) et par rapport à l'axe optique (2) de l'instrument d'imagerie (1) ce plan incliné comportant une droit (6) reliant les deux capteurs et contenur dans ledit plan contenant le premier capteur; **caractérisé en ce que** ledit deuxième capteur image la même scène que le premier capteur et **en ce que** le dispositif comporte des moyens permettant d'imager la même scène sur lesdits premier et deuxième capteurs à deux instants différents dans le temps, et un dispositif de calcul des aberrations optiques affectant chaque élément des deux capteurs.

2. Dispositif selon la revendication 1 **caractérisé en ce que** ledit instrument est situé sur un satellite en orbite défilante et comprend un télescope et **en ce que** l'acquisition des images par lesdits premiers et deuxième capteurs s'effectue du fait du défilement dudit satellite générant un déplacement de l'axe de visée dudit télescope.

3. Dispositif selon la revendication 1 **caractérisé en ce que** ledit instrument est situé sur un satellite et comprend un télescope et **en ce que** l'acquisition des images par lesdits premiers et deuxième capteurs s'effectue lors d'une manoeuvre dudit satellite générant un déplacement de l'axe de visée dudit télescope.

4. Dispositif selon l'une des revendications précédentes, appliqué à la mesure de défocalisations, **caractérisé en ce qu'**il comporte des moyens de calcul de la valeur de la défocalisation, qui est donnée par la valeur maximale du rapport des Densités Spectrales de Puissance ($DS_P$) des images obtenues par des colonnes ou groupes de colonnes des deux capteurs et corrigées d'une estimation de la DSP du bruit d'acquisition, ce rapport ($R_i(f)$) étant donné par :

$$R_i(f) = \frac{FTMdefoc(di + d0)(f)^2}{FTMdefoc(d0)(f)^2}$$

dans lequel : d0 est la valeur de la défocalisation du premier capteur, di est la défocalisation relative d'un pixel ou colonne de pixels de rang i du deuxième capteur par rapport au premier capteur, défocalisation qui est une fonction linéaire de i* sinus $\alpha$ selon l'expression : di=i*largeur du pixel sur la barrette inclinée * sinus $\alpha$, i étant compté depuis le centre de la barrette inclinée, FTMdefoc(d) est la fonction de transfert de modulation pour une fréquence spatiale f et une dé-focalisation d des images.

5. Dispositif selon l'une des revendications précédentes, **caractérisé en ce que** l'angle d'inclinaison ($\alpha$) du premier capteur par rapport au second est fonction de l'évaluation de la défocalisation maximale de l'instrument d'imagerie.

6. Dispositif selon l'une des revendications précédentes, **caractérisé en ce qu'**il comporte des moyens mettant en oeuvre la méthode de diversité de phase.

7. Dispositif selon la revendication 6, **caractérisé en ce que** l'angle d'inclinaison (α) du premier capteur par rapport au second est fonction de la défocalisation nécessaire à la mise en oeuvre de la méthode de diversité de phase.

8. Dispositif selon l'une des revendications précédentes, **caractérisé en ce que** les deux capteurs sont des barrettes linéaires d'éléments détecteurs opto-électroniques.

9. Dispositif selon l'une des revendications 1 à 7, **caractérisé en ce que** les deux capteurs sont des matrices rectangulaires (7,8) d'éléments détecteurs opto-électroniques.

10. Dispositif de correction des aberrations optiques d'un instrument d'imagerie à capteur opto-électronique, **caractérisé en ce qu'**il comporte dans une boucle d'asservissement un dispositif de mesure de ces défauts selon l'une des revendications précédentes.

11. Dispositif selon l'une des revendications précédentes, **caractérisé en ce qu'**il est disposé dans un instrument opto-électronique monté à bord d'un engin spatial.

12. Dispositif selon l'une des revendications 1 à 10 **caractérisé en ce qu'**il est disposé dans un instrument opto-électronique monté à bord d'un avion, hélicoptère ou drone.

## Claims

1. A static device for measuring optical defects in an imaging instrument with an opto-electronic sensor, comprising a plurality of detecting elements and comprising a first sensor (4) and at least one second sensor (5) disposed in a plane that is inclined relative to the plane containing the first sensor (4) and relative to the optical axis (2) of the imaging instrument (1), said inclined plane comprising a straight line (6) connecting the two sensors and contained in said plane containing the first sensor, **characterised in that** said second sensor images the same scene as the first sensor and **in that** the device comprises means for imaging the same scene on said first and second sensors at two different instants in time, and a device for calculating optical defects affecting each element of the two sensors.

2. The device according to claim 1, **characterised in that** said instrument is located on a satellite in drift orbit and comprises a telescope and **in that** the acquisition of images by said first and second sensors is carried out as a result of the drift of said satellite generating a displacement of the visual axis of said telescope.

3. The device according to claim 1, **characterised in that** said instrument is located on a satellite and comprises a telescope and **in that** the acquisition of images by said first and second sensors is carried out during a manoeuver of said satellite that generates a displacement of the visual axis of said telescope.

4. The device according to any one of the preceding claims, applied to the measurement of defocusing, **characterised in that** it comprises means for calculating the defocusing value, which is provided by the maximum value of the ratio of the Power Spectral Densities (PSD) of the images obtained by columns or groups of columns of the two sensors and corrected by an estimate of the PSD of the acquisition noise, this ratio ($R_i(f)$) being provided by:

$$R_i(f) = \frac{FTMdefoc(di+d0)(f)^2}{FTMdefoc(d0)(f)^2}$$

wherein: d0 is the defocusing value of the first sensor, di is the relative defocusing of a pixel or column of pixels of rank i of the second sensor relative to the first sensor, which defocusing is a linear function of i* sine α according to the expression: di=i*width of the pixel on the inclined bar * sine α, i being counted from the centre of the inclined bar, FTMdefoc(d) is the modulation transfer function for a spatial frequency f and a defocusing d of the images.

5. The device according to any one of the preceding claims, **characterised in that** the angle of inclination (α) of the first sensor relative to the second sensor is a function of the assessment of the maximum defocusing of the imaging instrument.

6. The device according to any one of the preceding claims, **characterised in that** it comprises means implementing the phase diversity method.

7. The device according to claim 6, **characterised in that** the angle of inclination ($\alpha$) of the first sensor relative to the second sensor is a function of the defocusing that is necessary for implementing the phase diversity method.

8. The device according to any one of the preceding claims, **characterised in that** the two sensors are linear bars of opto-electronic detecting elements.

9. The device according to any one of claims 1 to 7, **characterised in that** the two sensors are rectangular matrices (7, 8) of opto-electronic detecting elements.

10. A device for correcting optical defects in an imaging instrument with an opto-electronic sensor, **characterised in that** it comprises, in a control loop, a device for measuring these defects according to any one of the preceding claims.

11. The device according to any one of the preceding claims, **characterised in that** it is disposed in an opto-electronic instrument mounted on board a spacecraft.

12. The device according to any one of claims 1 to 10, **characterised in that** it is disposed in an opto-electronic instrument mounted on board an aeroplane, helicopter or drone.

**Patentansprüche**

1. Statische Vorrichtung zum Messen optischer Defekte eines Abbildungsgeräts mit einem optoelektronischen Sensor, die Folgendes umfasst: mehrere Detektorelemente sowie einen ersten Sensor (4) und wenigstens einen zweiten Sensor (5), der in einer Ebene angeordnet ist, die in Bezug auf die den ersten Sensor (4) enthaltende Ebene und in Bezug auf die optische Achse (2) des Abbildungsgeräts (1) geneigt ist, wobei diese geneigte Ebene eine Gerade (6) beinhaltet, die die beiden Sensoren verbindet und in der den ersten Sensor enthaltenden Ebene enthalten ist, **dadurch gekennzeichnet, dass** der zweite Sensor dieselbe Szene abbildet wie der erste Sensor, und dadurch, dass die Vorrichtung Mittel, die das Abbilden derselben Szene auf dem ersten und dem zweiten Sensor zu zwei unterschiedlichen Zeitpunkten zulassen, und eine Vorrichtung zum Berechnen von optischen Abweichungen umfasst, die jedes Element der beiden Sensoren beeinflussen.

2. Vorrichtung nach Anspruch 1, **dadurch gekennzeichnet, dass** sich das Gerät auf einem sich in orbitaler Bewegung befindlichen Satelliten befindet und ein Teleskop umfasst, und dadurch, dass die Erfassung der Bilder durch den ersten und zweiten Sensor infolge der Bewegung des Satelliten erfolgt, die eine Verschiebung der Sichtachse des Teleskops erzeugt.

3. Vorrichtung nach Anspruch 1, **dadurch gekennzeichnet, dass** sich das Gerät auf einem Satelliten befindet und ein Teleskop umfasst, und dadurch, dass die Erfassung von Bildern durch den ersten und den zweiten Sensor während eines Manövers des Satelliten erfolgt, das eine Verschiebung der Sichtachse des Teleskops erzeugt.

4. Vorrichtung nach einem der vorherigen Ansprüche, angewandt auf Defokussierungsmessungen, **dadurch gekennzeichnet, dass** sie Mittel zum Berechnen des Wertes der Defokussierung umfasst, der durch den Maximalwert des Verhältnisses der Leistungsspektraldichten (PSD) von Bildern gegeben wird, die anhand von Spalten oder Spaltengruppen der beiden Sensoren erhalten und anhand einer Schätzung der PSD des Erfassungsrauschens korrigiert werden, wobei dieses Verhältnis ($R_i(f)$) ausgedrückt wird durch:

$$R_i(f) = \frac{FTMdefoc(di + d0)(f)^2}{FTMdefoc(d0)(f)^2}$$

wobei: d0 der Wert der Defokussierung des ersten Sensors ist, di die relative Defokussierung eines Pixels oder einer Pixelspalte von Rang i des zweiten Sensors in Bezug auf den ersten Sensor ist, wobei diese Defokussierung eine lineare Funktion von i* sinus $\alpha$ gemäß dem folgenden Ausdruck ist: di=i*Breite des Pixels auf dem geneigten Balken * sinus $\alpha$, wobei i von der Mitte des geneigten Balkens gezählt wird, FTMdefoc(d) die Modulationstransferfunktion für eine räumliche Frequenz f und eine Defokussierung d der Bilder ist.

5. Vorrichtung nach einem der vorherigen Ansprüche, **dadurch gekennzeichnet, dass** der Neigungswinkel ($\alpha$) des ersten Sensors in Bezug auf den zweiten von der Beurteilung der maximalen Defokussierung des Abbildungsgerätes abhängig ist.

6. Vorrichtung nach einem der vorherigen Ansprüche, **dadurch gekennzeichnet, dass** sie Mittel zum Ausführen der Phase-Diversity-Methode umfasst.

7. Vorrichtung nach Anspruch 6, **dadurch gekennzeichnet, dass** der Neigungswinkel ($\alpha$) des ersten Sensors in Bezug auf den zweiten von der Defokussierung abhängig ist, die zum Ausführen der Phase-Diversity-Methode nötig ist.

8. Vorrichtung nach einem der vorherigen Ansprüche, **dadurch gekennzeichnet, dass** die beiden Sensoren lineare Balken von optoelektronischen Detektorelementen sind.

9. Vorrichtung nach einem der Ansprüche 1 bis 7, **dadurch gekennzeichnet, dass** die beiden Sensoren rechteckige Matrizen (7, 8) von optoelektronischen Detektorelementen sind.

10. Vorrichtung zum Korrigieren von optischen Abweichungen in einem Abbildungsgerät mit optoelektronischem Sensor, **dadurch gekennzeichnet, dass** sie in einem Regelkreis eine Vorrichtung zum Messen dieser Defekte nach einem der vorherigen Ansprüche umfasst.

11. Vorrichtung nach einem der vorherigen Ansprüche, **dadurch gekennzeichnet, dass** sie in einem an Bord eines Raumflugkörpers montierten optoelektronischen Gerät angeordnet ist.

12. Vorrichtung nach einem der Ansprüche 1 bis 10, **dadurch gekennzeichnet, dass** sie in einem an Bord eines Flugzeugs, eines Helikopters oder einer Drohne montierten optoelektronischen Gerät angeordnet ist.

FIG.1

Sens de défilement

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 10227971 A
- US 20050270611 A1
- US 20070102620 A
- JP 57019703 A